# EUROPÄISCHE PATENTSCHRIFT

(11) **EP 3 672 895 B1**
(45) Veröffentlichungstag und Bekanntmachung des Hinweises auf die Patenterteilung: **02.03.2022**
(21) Anmeldenummer: 18733523.7
(22) Anmeldetag: 13.06.2018
(51) Int. Cl.: B65H 63/06, B65H 59/40, G01L 5/10, G01L 5/102

(54) **VERFAHREN UND VORRICHTUNG ZUM TEXTURIEREN EINES SYNTHETISCHEN FADENS**
METHOD AND DEVICE FOR TEXTURING A SYNTHETIC THREAD
PROCÉDÉ ET DISPOSITIF DE TEXTURATION D'UN FIL SYNTHÉTIQUE

(30) Priorität: 23.08.2017 DE 102017007991
(43) Veröffentlichungstag der Anmeldung: 01.07.2020
(73) Patentinhaber: Oerlikon Textile GmbH & Co. KG, 42897 Remscheid (DE)
(72) Erfinder: HUTHMACHER, Jörg, 45768 Marl (DE)
(74) Vertreter: Keenway Patentanwälte Neumann Heine Taruttis
(86) Internationale Anmeldenummer: PCT/EP2018/065591
(87) Internationale Veröffentlichungsnummer: WO 2019/037919

(56) Entgegenhaltungen:
- EP-A2- 1 144 295
- WO-A1-00/60506
- DE-A1-102004 026 859
- US-A- 5 682 146

## Beschreibung

Die Erfindung betrifft ein Verfahren zum Texturieren eines synthetischen Fadens gemäß dem Oberbegriff des Anspruchs 1 sowie eine Vorrichtung zum Texturieren eines synthetischen Fadens gemäß dem Oberbegriff des Anspruchs 9.

Ein gattungsgemäßes Verfahren und eine gattungsgemäße Vorrichtung zum Texturieren eines synthetischen Fadens ist aus der EP 1 144 295 B1 bekannt.

Zur Veredelung synthetischer Fäden, die beim Schmelzspinnen aus einer Vielzahl feiner Filamente gebildet werden, ist es allgemein bekannt, die synthetischen Fäden in einem Folgeprozess zu texturieren. Dabei erhalten die Filamente des Fadens eine Kräuselung, so dass die synthetischen Fäden eine bauschige Struktur erhalten und so besonders für textile Anwendungen geeignet sind. In dem Texturierprozess werden die Fäden von Spulen abgezogen, die zuvor in einem Schmelzspinnverfahren erzeugt wurden. Um den Prozess kontinuierlich betreiben zu können, ist es dabei üblich, ein Fadenende einer Vorlagespule mit einem Fadenanfang einer Reservespule zu verknoten. Derartige Fadenknoten stellen jedoch eine Störstelle im texturierten Faden dar, die insbesondere bei einer Weiterbearbeitung zu unerwünschten Fehlstellen im Gewebe führt.

Bei dem bekannten Verfahren und bei der bekannten Vorrichtung wird daher in einem Fadenabschnitt zwischen der Vorlagespule und der Reservespule eine Sensoreinrichtung angeordnet, die den Übergang des Fadenknotens in dem Prozess signalisiert. Hierzu ist es jedoch erforderlich, dass eine Bedienperson beim Verbinden der Vorlagespule mit der Reservespule den entsprechenden Fadenabschnitt in die Sensoreinrichtung einführt. Neben dem zusätzlichen Bedienungsaufwand besteht hierbei auch die Gefahr, dass das Einlegen des Fadenabschnittes in die Sensoreinrichtung durch die Bedienperson einfach vergessen wird.

Es ist zwar auch bekannt, dass derartige Fadenknoten bei der Überwachung der Fadenzugkraft in dem Texturierprozess zu einer ungewünschten Messwertänderung führt. Hierbei wurde jedoch festgestellt, dass die Messwertschwankungen aufgrund von Fadenknoten zum Teil unterhalb vorgegebener Schwellwerte liegen und somit nicht erfasst werden.

Aus der US 5,682,146 A ist ein Verfahren zur Qualitätsprüfung eines Fadens bekannt, bei dem Messwerte mit einer einfachen Vergleichslogik ausgewertet werden.

Es ist Aufgabe der Erfindung, das gattungsgemäße Verfahren und die gattungsgemäße Vorrichtung zum Texturieren eines synthetischen Fadens dahingehend zu verbessern, dass jeder Fadenknoten im Fadenlauf ohne zusätzlichen Bedienungsaufwand sicher identifizierbar ist.

Diese Aufgabe wird erfindungsgemäß durch ein Verfahren mit den Merkmalen nach Anspruch 1 und durch eine Vorrichtung mit den Merkmalen nach Anspruch 9 gelöst.

Vorteilhafte Weiterbildungen der Erfindung sind durch die Merkmale und Merkmalskombinationen der jeweiligen Unteransprüche definiert.

Die Erfindung basiert auf der Erkenntnis, dass die in einer Zeitfolge auftretenden Messwertveränderungen der Fadenspannung aufgrund eines Fadenknotens in dem Verlauf der Fadenspannung typische Abhängigkeiten zwischen den einzelnen Messsignalen ergeben. Hierbei tritt die Abhängigkeit der Messsignale zueinander aufgrund eines Fadenknotens unabhängig von einem Schwellwert der Fadenspannung auf. So lassen sich durch eine Analyse der Messsignaländerungen heraus typische Merkmale zur Identifizierung eines Fadenknotens ableiten. Hierzu werden die Messsignale erfindungsgemäß mit einem maschinellen Lernprogramm analysiert. Das maschinelle Lernprogramm ermöglicht eine schnelle und komplexe Analyse einer Vielzahl an Messsignalen, so dass deren Abhängigkeiten zueinander insbesondere in zeitlichen Abständen schnell analysiert und somit ein Fadenknoten sicher und schnell identifizierbar ist.

Hierbei hat sich die Verfahrensvariante als besonders vorteilhaft erwiesen, bei welcher eine zeitliche Folge von Messsignalen der Fadenspannung als ein Analysegraph erfasst und analysiert wird.

Um insbesondere die zulässigen Änderungen der Fadenspannung von einer unzulässigen Änderungen der Fadenspannungen, die einen vorgegebenen Schwellwert überschreiten, differenziert behandeln zu können, ist die Verfahrensvariante besonders vorteilhaft, bei welcher eine zeitliche Folge von Messsignalen der Fadenspannung bei einer Überschreitung eines Schwellwertes der Fadenspannung als ein Fehlergraph erfasst und analysiert wird. Der Schwellwert kann beispielsweise durch einen oberen Grenzwert und einen unteren Grenzwert der Fadenspannung auch einen Toleranzbereich umfassen.

Aufgrund einer Vielzahl von Messsignalen, die kontinuierlich zur Analyse anstehen, hat sich die Verfahrensvariante besonders bewährt, bei welcher die Analyse der Messsignale der Fadenspannung durch zumindest einen Maschinenlernalgorithmus des maschinellen Lernprogramms ausgeführt wird. So lässt sich eine künstliche Intelligenz dazu nutzen, um selbst bei einer großen Datenmenge strukturierte Analysen durchzuführen und die Identifizierung des Fadenknotens in kürzesten Analysezeiten zu identifizieren. Hierzu ist es jedoch zunächst erforderlich, dass der Maschinenlernalgorithmus zum Lernen zunächst auf ermittelte Basisdaten zurückgreift. Hierzu werden beispielsweise zu Beginn eines Prozesses analysierte Analysegraphen und analysierte Fehlergraphen dem Maschinenlernalgorithmus zum Lernen übergeben.

Nach einer Lernphase ist es möglich, dass der Maschinenlernalgorithmus durch Analyse der Messsignale oder Analysegraphen oder Fehlergraphen selbsttätig zu einer eindeutigen Identifizierung der Fadenknoten ausführt.

Da in einem Texturierprozess neben dem Fadenkoten auch weitere Störungen auftreten können, die zu einer Überschreitung des Schwellwertes der Fadenspannung führen, ist die Weiterbildung der Erfindung bevorzugt ausgeführt, bei welcher die Fehlergraphen mehrere Fehlergraphkategorien zugeordnet sind, wobei der Fadenknoten einer der Fehlergraphkategorien ist. So kann durch Erweiterung des Maschinenlernalgorithmus eine ergänzende Zuordnung der Fehlergraphen zu einer Fehlergraphkategorie durchgeführt werden.

Um eine gezielte Diagnose und vor allem eine schnelle Prozessänderung herbeiführen zu können, ist die Verfahrensvariante besonders vorteilhaft, bei welcher jedem der Fehlergraphkategorien eine bestimmte Prozessstörung und / oder bestimmter Bedienungsfehler und / oder ein bestimmter Störparameter und / oder ein bestimmter Produktfehler zugeordnet ist / sind. Damit kann nach Zuordnung der Fehlergraphen sofort die zugrundeliegende Ursache für die Fadenspannungsabweichung beseitigt werden. So lassen sich insbesondere bei der Herstellung der Fäden größere Ausschussmengen vermeiden.

Zur Automatisierung des jeweiligen Texturierprozesses ist die Verfahrensvariante vorgesehen, bei welcher nach Identifizierung des Fadenknotens oder nach Zuordnung des Fehlergraphens zu einer der Fehlergraphkategorien ein Steuerungsbefehl zu einer Prozessänderung ausgelöst wird. Die Prozessänderung könnte beispielsweise ein vorzeitiger Spulenwechsel sein, um das Einwickeln eines Fadenknotens zu vermeiden. Alternativ besteht jedoch auch die Möglichkeit, über eine Signalgebung den Operator eine bestimmte Bedienungsanweisung zukommen zu lassen.

Die erfindungsgemäße Vorrichtung zum Texturieren eines synthetischen Fadens löst die Aufgabe dadurch, dass die Fadenspannungsmesseinrichtung unmittelbar mit einer Diagnoseinheit derart zusammenwirkt, dass die Messsignale der Fadenspannung mit einem maschinellen Lernprogramm zum Identifizieren eines Fadenkotens analysierbar sind. So können die Messsignale der Fadenspannung in dem Texturierprozess unmittelbar zu einer Identifizierung des Fadenknotens genutzt werden.

Die Diagnoseeinheit weist zumindest einen programmierbaren Lernprozessor zur Ausführung des maschinellen Lernprogramms auf. Dabei kann der Lernprozessor direkt mit der Fadenspannungsmesseinrichtung gekoppelt werden.

Zur Optimierung des maschinellen Lernprogramms und zur Verbesserung der Diagnosesicherheit ist desweiteren vorgesehen, dass der Lernprozessor mit einer Eingabeeinheit gekoppelt ist, durch welche ein oder mehrere ermittelte Analysegraphen oder Fehlergraphen einlesbar sind. So werden insbesondere zum Lernen typische Analysegraphen von Fadenkoten dem Maschinenlernprogramm zugeführt.

Damit bei der Prozessführung ein Operator über den jeweiligen Prozesslauf informiert ist, ist desweiteren vorgesehen, dass der Lernprozessor mit einer Ausgabeeinheit gekoppelt ist, durch welche eine Identifizierung eines Fadenknotens oder eine Zuordnung der analysierten Fehlergraphen zu einer Fehlergraphkategorien visualisierbar ist. Diese Ausgabeeinheit kann dabei vorteilhaft drahtlos mit dem Lernprozessor gekoppelt sein und jede Art von Gerät darstellen, an welchem eine Anzeige möglich ist.

Um ein möglichst autarkes System zur Diagnose zu erhalten, ist desweiteren vorgesehen, dass der Lernprozessor ein neuronales Netz zur Ausführung des maschinellen Lernprogramms aufweist. So können die großen Datenmengen bei der Fadenspannungsmessung kontinuierlich analysiert werden.

Zur Überwachung mehrerer Bearbeitungsstellen in einer Texturiermaschine ist die erfindungsgemäße Vorrichtung in der Weiterbildung vorteilhaft nutzbar, bei welchem der Lernprozessor räumlich getrennt zu der Eingabeeinheit und der Ausgabeeinheit angeordnet ist. Hierbei besteht die Möglichkeit, dass der Lernprozessor mit mehreren Eingabeeinheiten und insbesondere mit mehreren Ausgabeeinheiten in Kontakt steht. Die Verbindung erfolgt dann bevorzugt drahtlos, so dass der Lernprozessor auch in einem virtuellen Raum ausgebildet sein könnte.

Zur Automatisierung wird die erfindungsgemäße Vorrichtungsvariante vorteilhaft genutzt, bei welcher die Diagnoseinheit mit einer Maschinensteuereinheit verbunden ist, durch welche ein Steuerbefehl zur Prozessänderung ausführbar ist. So könnte nach Identifizierung eines Fadenknotens entsprechende Maßnahmen getroffen werden, um den Fadenknoten am Anfang oder am Ende einer gewickelten Spule einzubinden.

Das erfindungsgemäße Verfahren zum Texturieren eine synthetischen Fadens wird nachfolgend an einem Ausführungsbeispiel der erfindungsgemäßen Vorrichtung unter Bezug auf die beigefügten Figuren näher erläutert.

Es stellen dar:
- Fig. 1: schematisch ein Ausführungsbeispiel der erfindungsgemäßen Vorrichtung zum Texturieren eines synthetischen Fadens
- Fig. 2: schematisch ein möglicher Aufbau einer Diagnoseinheit des Ausführungsbeispiels der erfindungsgemäßen Vorrichtung aus Fig. 1
- Fig. 3.1: schematisch ein Analysegraph mit einer Zeitfolge mehrerer Messsignale einer Fadenspannung bei einem Fadenknoten
- Fig. 3.2: schematisch ein Fehlergraph mit einer Zeitfolge mehrerer Messsignale einer Fadenspannung während eines Fadenknotens
- Fig. 4: schematisch ein weiteres Ausführungsbeispiel einer Diagnoseeinheit der erfindungsgemäßen Vorrichtung zum Texturieren eines synthetischen Fadens
- Fig. 5.1: schematisch ein Fehlergraph mit einer Zeitfolge mehrerer Messsignale der Fadenspannung einer Fehlergraphkategorie
- Fig. 5.2: schematisch einen Fehlergraph mit einer zeitlichen Folge mehrerer Messwerte der Fadenspannung einer anderen Fehlergraphkategorie

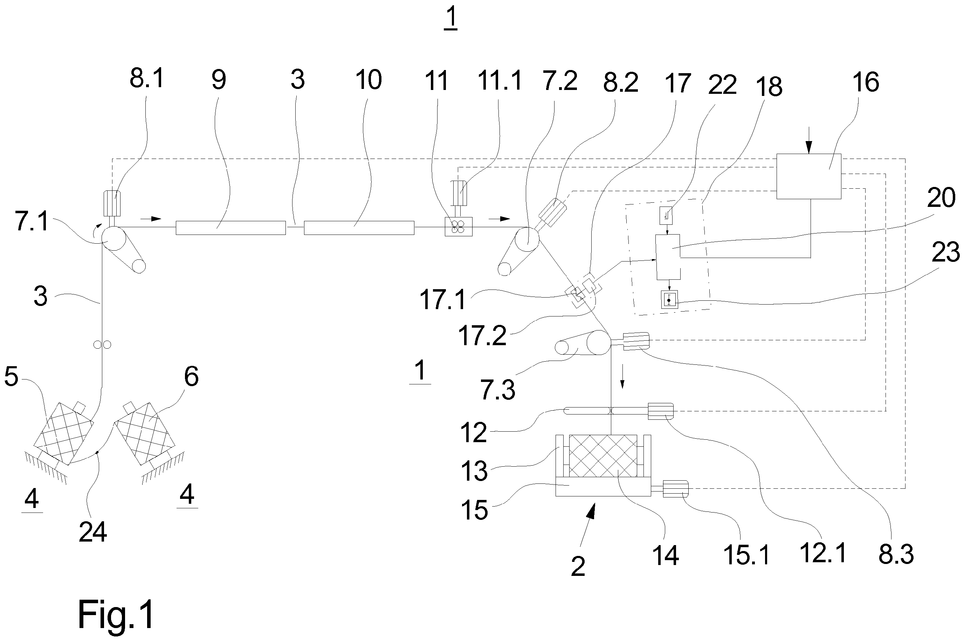

In der Fig. 1 ist schematisch ein Ausführungsbeispiel der erfindungsgemäßen Vorrichtung zum Texturieren eines synthetischen Fadens gezeigt. Der Texturierprozess ist hierbei durch eine Bearbeitungsstelle der erfindungsgemäßen Vorrichtung beschrieben. Derartige Vorrichtungen weisen üblicherweise eine Vielzahl von Bearbeitungsstellen auf, um eine Vielzahl von Fäden parallel nebeneinander zu texturieren. In Fig. 1 ist schematisch eine Bearbeitungsstelle 1 und eine Spulstelle 2 einer erfindungsgemäßen Vorrichtung dargestellt. Die Bearbeitungsstelle 1 weist ein Gatter 4 auf, in welcher eine Vorlagespule 5 und eine Reservespule 6 gehalten sind. Die Vorlagespule 5 liefert einen Faden 3, der zum Verstrecken und Texturieren in die Bearbeitungsstelle 1 überführt wird. Ein Fadenende der Vorlagespule 5 ist mit einem Fadenanfang der Reservespule 6 durch einen Fadenknoten 24 miteinander verbunden. So wird ein kontinuierlicher Abzug des Fadens nach Beendigung der Vorlagespule 5 realisiert. Das Fadenende der Reservespule 6 wird dann mit dem Fadenanfang einer neuen Vorlagespule 5 verbunden.

Der Abzug des Fadens von der Vorlagespule 5 erfolgt durch ein erstes Lieferwerk 7.1. Das Lieferwerk 7.1 wird über einen Antrieb 8.1 angetrieben. Das Lieferwerk 7.1 ist in diesem Ausführungsbeispiel durch eine angetriebene Galette gebildet. Im weiteren Fadenverlauf ist dem Lieferwerk 7.1 eine Heizeinrichtung 9, eine Kühleinrichtung 10 und ein Texturieraggregat 11 nachgeordnet. Das Texturieraggregat 11 wird über einen Texturierantrieb 11.1 angetrieben. Das Texturieraggregat 11 ist vorzugweise als Friktionsdrallgeber ausgeführt, um an dem Faden 3 einen Falschdrall zu erzeugen.

Zum Verstrecken des Fadens ist dem Texturieraggregat 11 ein zweites Lieferwerk 7.2 nachgeordnet, das durch den Antrieb 8.2 angetrieben wird. Das Lieferwerk 7.2 ist im Aufbau identisch zu dem ersten Lieferwerk 7.1, wobei das zweite Lieferwerk 7.2 mit einer höheren Umfangsgeschwindigkeit zum Verstrecken des Fadens betrieben wird. Innerhalb der Bearbeitungsstelle 1 wird der synthetische Faden 3 somit texturiert und gleichzeitig verstreckt. Nach der Behandlung des Fadens 3 wird dieser durch ein drittes Lieferwerk 7.3 zu einer Spulstelle 2 geführt. Das Lieferwerk 7.3 wird durch den Antrieb 8.3 angetrieben.

Die Spulstelle 2 weist einen Spulenhalter 13 auf, welcher eine Spule 14 trägt. Der Spulenhalter 13 ist schwenkbar ausgebildet und lässt sich zum Auswechseln der Spule 14 manuelle oder automatisiert bedienen. Dem Spulenhalter 13 ist eine Treibwalze 15 zugeordnet, die durch einen Walzenantrieb 15.1 angetrieben wird. Zum Verlegen des Fadens am Umfang der Spule 15 ist der Spulstelle 2 eine Changiereinheit 12 zugeordnet, die einen antreibbaren Changierfadenführer aufweist. Der Changierfadenführer wird hierzu über den Changierantrieb 12.1 angetrieben.

Der Changierantrieb 12.1 und der Walzenantrieb 15.1 der Spulstelle 2 sind als Einzelantriebe ausgebildet und mit einer Maschinensteuereinheit 16 verbunden. Ebenso sind die Antriebe 8.1, 8.2 und 8.3 der Lieferwerke 7.1, 7.2 und 7.3 sowie der Texturierantrieb 11.1 des Texturieraggregates 11 der Bearbeitungsstelle 1 als Einzelantriebe ausgeführt und mit der Maschinensteuereinheit 16 gekoppelt.

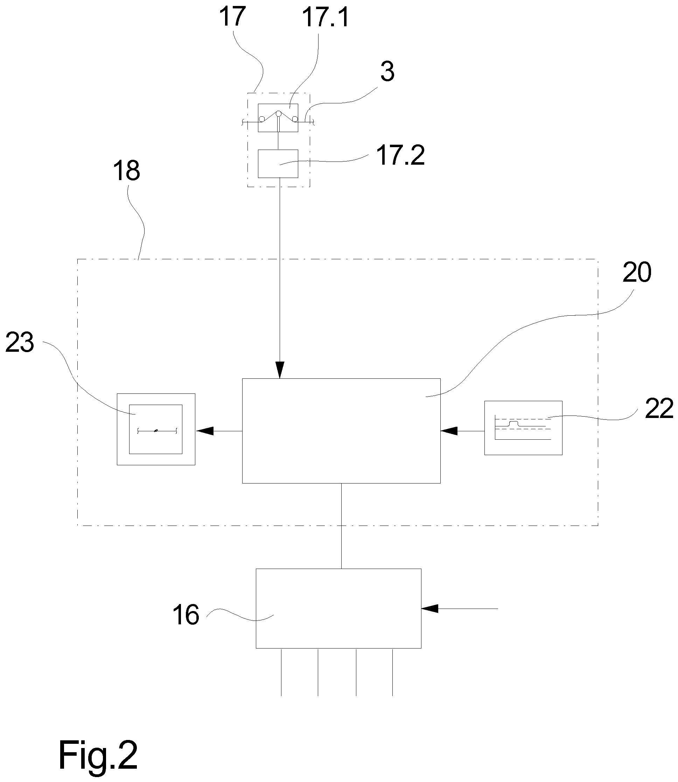

Zur Prozessüberwachung wird an dem laufenden Faden 3 in einer Messstelle zwischen den Lieferwerken 7.2 und 7.3 kontinuierlich eine Fadenspannung gemessen. Hierzu ist eine Fadenspannungsmesseinrichtung 17 vorgesehen, die einen Fadenspannungssensor 17.1 und einen Messsignalaufnehmer 17.2 aufweist. Die Fadenspannungsmesseinrichtung 17 ist mit einer Diagnoseeinheit 18 verbunden. Zur weiteren Erläuterung der Diagnoseeinheit 18 wird zusätzlich zu der Figur 2 Bezug genommen.

In der Fig. 2 ist schematisch die Diagnoseeinheit 18 zur Analyse der Messsignale der Fadenspannung dargestellt. Die Diagnoseeinheit 18 umfasst in diesem Ausführungsbeispiel einen Lernprozessor 20. Der Lernprozessor 20 ist direkt mit dem Messsignalaufnehmer 17.2 der Fadenspannungsmesseinrichtung 17 verbunden. Der Lernprozessor 20 ist programmierbar ausgeführt und weist vorzugsweise ein neuronales Netz auf, um ein maschinelles Lernprogramm auszuführen. Das maschinelle Lernprogramm umfasst zumindest einen Maschinenlernalgorithmus, um mit künstlicher Intelligenz umfangreiche Analysen der Messsignale der Fadenspannung durchführen zu können.

Dem Lernprozessor 20 ist eine Eingabeeinheit 22 und eine Ausgabeeinheit 23 zugeordnet. Um nach einer Analyse mögliche Prozessänderungen einleiten zu können, ist die Diagnoseeinheit 18 über dem Lernprozessor 20 direkt mit einer Maschinensteuereinheit 16 verbunden. Die Maschinensteuereinheit 16 ist mit den Antrieben und Aktoren der Prozessaggregate der Bearbeitungsstelle 1 gekoppelt.

Die Verbindungen zwischen dem Lernprozessor 20 und der Fadenspannungsmesseinrichtung 17, der Eingabeeinheit 22 und der Ausgabeeinheit 23 kann durch jeweils eine drahtgebundene oder drahtlose Verbindung erfolgen. Insbesondere bei einer drahtlosen Verbindung besteht die Möglichkeit, dass die einzelnen Einheiten nicht am selben Ort gehalten werden müssen. So ist der Lernprozessor 20 in der Diagnoseeinheit 18 integriert. Dabei besteht auch die Möglichkeit, den Lernprozessor 20 unabhängig von der Eingabeeinheit 22 und der Ausgabeeinheit 23 in einem virtuellen Raum anzuordnen.

In dem Lernprozessor 20 werden die von dem Messsignalaufnehmer 17.1 übermittelten Messsignale der Fadenspannung mit dem maschinellen Lernprogramm analysiert. Hierzu weist das maschinelle Lernprogramm zumindest einen Maschinenlernalgorithmus auf, der mit Hilfe eines neuronalen Netzes eine strukturierte Analyse der Messsignale zur Identifizierung eines Fadenknotens ausführt. Hierbei werden insbesondere die in zeitlicher Folge auftretenden Messsignaländerungen analysiert, um die typischen Merkmale zur Identifizierung des Fadenknotens aufzudecken.

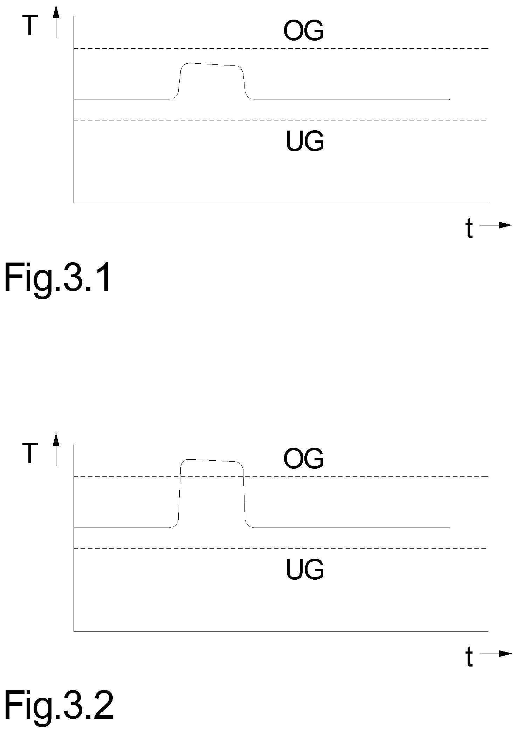

In der Fig. 3.1 ist ein Ausführungsbeispiel einer zeitlichen Messsignalfolge der Fadenspannung dargestellt, die beim Überlauf eines Fadenknotens an der Messstelle gemessen wurde. Der gesamte Verlauf der Messsignale der Fadenspannung ist hier als ein Analysegraph dargestellt. Das Messsignal der Fadenspannung wird dabei mit einem oberen Grenzwert und einem unteren Grenzwert verglichen. In dem Analysegraph ist der obere Grenzwert mit dem Kennbuchstaben OG und der untere Grenzwert mit dem Kennbuchstaben UG gekennzeichnet. Hierzu ist auf der Ordinate die Fadenspannung T und auf der Abszisse die Zeit t aufgetragen. Bei dem in Fig. 3.1 dargestellten Signalverlauf der Messsignale der Fadenspannung ist keine Überschreitung des oberen Grenzwertes und keine Unterschreitung des unteren Grenzwertes zu erkennen. Insoweit ist die durch den Fadenknoten an der Messstelle verursachte Signaländerung der Fadenspannung im zulässigen Bereich. Dennoch würde der Fadenknoten im Folgeprozess beispielsweise in einem Gewebe einen unzulässigen Fehler darstellen. Somit wird während der Analyse der zeitliche Verlauf der Messsignale im Hinblick auf die charakteristische Änderung analysiert, um den Fadenknoten zu identifizieren.

In dem Texturierprozess führen derartige Fadenknoten im Fadenlauf auch zu Fadenspannungsänderungen, die eine Überschreitung der Schwellwerte verursachen. Hierzu ist in Fig. 3.2 ein weiteres Ausführungsbeispiel eines typischen Signalverlaufes bei einem Fadenknoten dargestellt. Da in diesem Fall ein oberer Grenzwert überschritten wird, liegt eine unzulässige Fadenspannungsschwankung vor. Insoweit wird der Verlauf der Messsignale der Fadenspannung in diesem Fall als ein Fehlergraph definiert. Der Fehlergraph bildet somit einen Signalverlauf der Fadenspannung ab, welcher einen Schwellwert über- oder unterschreitet. Als Schwellwerte sind auch in diesem Fall der obere Grenzwert mit dem Kennbuchstaben OG und der untere Grenzwert mit dem Kennbuchstaben UG eingezeichnet.

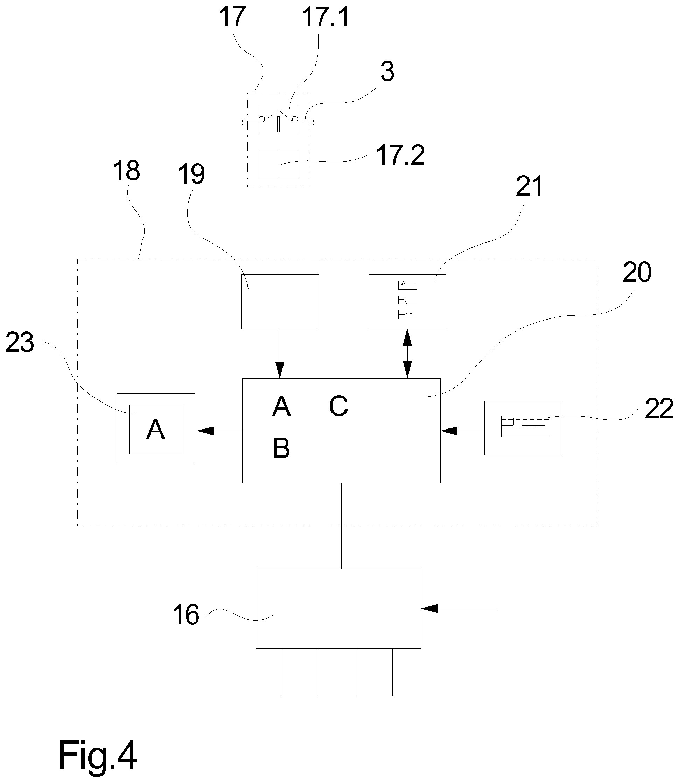

Um eine differenzierte und insbesondere eine erweiterte Analyse und Diagnose von Störursachen zu ermöglichen, ist in Fig. 4 ein weiteres Ausführungsbeispiel einer Diagnoseeinheit 18 dargestellt, wie sie beispielsweise in der erfindungsgemäßen Vorrichtung nach Fig. 1 einsetzbar wäre. In diesem Fall umfasst die Diagnoseeinheit 18 eine Fadenspannungsauswertungseinheit 19, die direkt mit der Fadenspannungsmesseinrichtung 17 verbunden ist. So werden die Messsignale des Messsignalaufnehmers 17.2 der Fadenspannungswertungseinheit 19 zugeführt. Innerhalb der Fadenspannungsauswertungseinheit 19 werden zunächst zeitliche Verläufe der Messsingale der Fadenspannung aufgezeichnet und als ein Analysegraph erzeugt. Parallel werden die Messsignale mit einem Schwellwert verglichen. Üblicherweise wird das Messsignal an dem Fadenspannung mit einem oberen Grenzwert und einem unteren Grenzwert verglichen. Sobald eine unzulässige Toleranzabweichung der Fadenspannung erkannt wird, wird der kurzzeitige Messsignalverlauf der Fadenspannung aufgezeichnet und als ein Fehlergraph erzeugt.

Je nachdem, ob ein Analysegraph ohne Schwellüberschreitung oder ein Fehlergraph mit Schwellwertverletzung vorliegt, wird dieser an einen Lernprozessor 20 übergeben. Der Lernprozessor 20 ist dementsprechend in seinem Maschinenlernalgorithmus angepasst, um entsprechende Analysen zur Identifizierung des Fadenknotens ausführen zu können.

Da die in der Messstelle festgestellten Fadenspannungsschwankungen mit Schwellwertverletzung auch durch andere Störparameter verursacht werden, ist das maschinelle Lernprogramm und insbesondere der Maschinenlernalgorithmus um mehrerer Fehlergraphkategorien erweitert. Als Fehlergraphkategorie wird hierbei eine bestimmte Prozessstörung und ein bestimmter Bedienungsfehler oder ein bestimmter Störparameter oder ein bestimmter Produktfehler bezeichnet, der in einem Fehlergraphen einen charakteristischen Signalverlauf der Fadenspannung verursacht. Insoweit lassen sich auch andere Fehlergraphen zum Auffinden möglicher Störungen analysieren. So könnte beispielsweise der in Fig. 3.2 dargestellte Fehlergraph die Fehlergraphkategorie A definieren. Die Fehlergraphkategorie A ist damit gleichzusetzen mit der Identifizierung des Fadenknotens.

Wie aus Fig. 4 hervorgeht, ist dem Lernprozessor 20 eine Speichereinheit 21 zugeordnet, in welcher ein Datenpool von Fehlergraphen und Fehlergraphkategorien gespeichert ist. So lässt sich das maschinelle Lernprogramm schulen und erweitern.

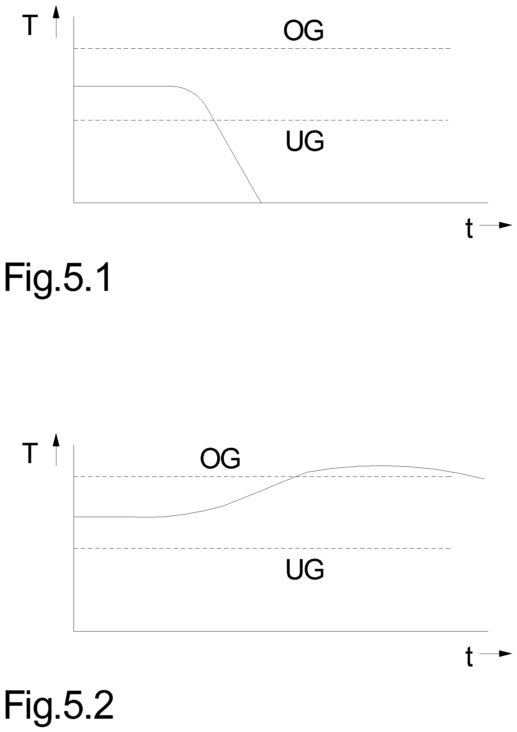

In den Fig. 5.1 und 5.2 sind weitere typische Fehlergraphen möglicher Fehlergraphkategorien dargestellt. Der in Fig. 5.1 dargestellte Fehlergraph bestimmt die Fehlergraphkategorie B. Die Fehlergraphkategorie B könnte ihre Störursache in einem Fadenbruch oder einem Bedienfehler haben, bei welcher die Fadenspannung in der Messstelle plötzlich komplett einbricht. Insoweit liegt eine Unterschreitung des unteren Grenzwertes UG vor. Das Messsignal der Fadenspannung sinkt plötzlich auf einen Wert 0 ab.

Der in Fig. 5.2 dargestellte Fehlergraph bestimmt in diesem Ausführungsbeispiel die Fehlergraphkategorie C. Die Fehlergraphkategorie könnte beispielsweise eine Verschleißsituation an einem der Prozessaggregate beispielsweise einer vom Faden kontaktieren Kühlschiene darstellen. Hierbei wird ein schleichender Anstieg des Messsignals der Fadenspannung bis zur Überschreitung des oberen Grenzwertes OG festgestellt.

Insoweit ist jedem der Fehlergraphkategorien A bis C eine bestimmte Störung zuzuordnen. Die in den Fig. 5.1 und 5.2 dargestellten Fehlergraphkategorien sind nur beispielhaft. In dem Texturierprozess, wie er in der erfindungsgemäßen Vorrichtung nach Fig. 1 ausgeführt wird, kann eine Vielzahl von Fehlergraphkategorien auftreten, denen eine eindeutige Ursache im Prozess zugrunde liegt. Bei der in Fig. 4 dargestellten Diagnoseeinheit 18 wird innerhalb des Lernprozessors 20 der von der Fadenspannungsauswertungseinheit 19 bereitgestellte Fehlergraph mit dem maschinellen Lernprogramm analysiert. Hierbei wird der Fehlergraph mit Hilfe von zumindest einem vorzugsweise mehreren Maschinenlernalgorithmen analysiert. Am Ende der Analyse erfolgt eine Klassifizierung in eine der bereits gelernten Fehlergraphkategorien.

Bei den in den Fig. 2 und 4 dargestellten Diagnoseeinheiten wird jeweils in der Ausgabeeinheit 23 angezeigt, dass ein Fadenknoten in dem Fadenlauf identifiziert ist. Bei Analyse der Fehlergraphen erfolgt hierzu die Zuordnung zu der Fehlergraphkategorie A. Somit ist ein Operator informiert und kann ggf. selbst eine Handlung zur Änderung des Prozesses durchführen. Alternativ besteht jedoch auch die Möglichkeit, dass durch den Lernprozessor 20 unmittelbar ein Signal an die Maschinensteuereinheit 16 gegeben wird. Daher ist der Lernprozessor 20 auch mit der Maschinensteuereinheit 16 der erfindungsgemäßen Vorrichtung nach Fig. 1 verbunden. So könnte beispielsweise bei der Identifizierung des Fadenknotens bzw. bei der Zuordnung der Fehlergraphkategorie A ein vorzeitiger Spulenwechsel eingeleitet werden, um den Fadenknoten im Bereich des Fadenanfangs einer Spule oder im Bereich eines Fadenendes einer Spule einzubinden.

Das erfindungsgemäße Verfahren ist somit besonders geeignet, um die Fadenknoten in den Endspulen zu lokalisieren und somit definiert aus einem Weiterbehandlungsprozess herauszuhalten. Hierbei sind keine zusätzlichen Hilfsmittel erforderlich, um den Fadenknoten im Fadenlauf zu identifizieren.

## Patentansprüche

1. Verfahren zum Texturieren eines synthetischen Fadens (3), bei welchem der Faden (3) von einer Vorlagespule (5) abgezogen und verstreckt wird, wobei ein Fadenende der Vorlagespule (5) mit einem Fadenanfang einer Reservespule (6) durch einen Fadenknoten verbunden ist, und bei welchem eine Fadenspannung des Fadens (3) zur Überwachung der Texturierung fortlaufend in einer Messstelle gemessen und analysiert wird, **dadurch gekennzeichnet, dass** zum Identifizieren des Fadenknotens an der Messstelle die Messsignale der Fadenspannung mit einem maschinellen Lernprogramm analysiert werden.

2. Verfahren nach Anspruch 1, **dadurch gekennzeichnet, dass** eine zeitliche Folge von Messsignalen der Fadenspannung als ein Analysegraph erfasst und analysiert wird.

3. Verfahren nach Anspruch 1, **dadurch gekennzeichnet, dass** eine zeitliche Folge von Messsignalen der Fadenspannung bei einer Überschreitung eines Schwellwertes der Fadenspannung als ein Fehlergraph erfasst und analysiert wird.

4. Verfahren nach einem der Ansprüche 1 bis 3, **dadurch gekennzeichnet, dass** die Analyse der Messsignale der Fadenspannung durch zumindest einen Maschinenlernalgorithmus des maschinellen Lernprogramms ausgeführt wird.

5. Verfahren nach Anspruch 4, **dadurch gekennzeichnet, dass** der Fadenknoten durch den Maschinenlernalgorithmus aus analysierten Analysegraphen oder analysierten Fehlergraphen identifiziert wird.

6. Vorrichtung nach Anspruch 4 oder 5, **dadurch gekennzeichnet, dass** die Fehlergraphen mehreren Fehlerkategorien zugeordnet sind, wobei der Fadenknoten einer der Fehlergraphkategorien ist.

7. Verfahren nach Anspruch 6, **dadurch gekennzeichnet, dass** die anderen Fehlergraphkategorien eine bestimmte Prozessstörung und/oder ein bestimmter Bedienungsfehler und/oder ein bestimmter Störparameter und/oder ein bestimmter Produktfehler zugeordnet ist/sind.

8. Verfahren nach einem der vorgenannten Ansprüche, **dadurch gekennzeichnet, dass** nach Identifizierung des Fadenknotens oder nach Zuordnung des Fehlergraphens zu einem der Fehlergraphkategorien ein Steuerungsbefehl zu einer Prozessänderung ausgelöst wird.

9. Vorrichtung zum Texturieren eines synthetischen Fadens (3) mit einem Gatter (4) zur Aufnahme einer Vorlagespule (5) und einer Reservespule (6), mit mehreren Lieferwerken (7.1, 7.2, 7.3), mit einem Texturieraggregat (11), mit einer Spulstelle (2) und mit einer Fadenspannungsmesseinrichtung (17) zum Messen einer Fadenspannung an einer Messstelle, **dadurch gekennzeichnet, dass** die Fadenspannungsmesseinrichtung (17) mit einer Diagnoseeinheit (18) derart zusammenwirkt, dass die Messsignale der Fadenspannung (T) mit einem maschinellen Lernprogramm zum Identifizieren eines Fadenknotens (24) analysierbar sind, wobei die Diagnoseeinheit (18) einen programmierbaren Lernprozessor (20) zur Ausführung des maschinellen Lernprogramms aufweist.

10. Vorrichtung nach Anspruch 9, **dadurch gekennzeichnet, dass** der Lernprozessor (20) mit einer Eingabeeinheit (22) gekoppelt ist, durch welche ein oder mehrere ermittelte Analysegraphen der Fadenspannung einlesbar sind.

11. Vorrichtung nach Anspruch 9 oder 10, **dadurch gekennzeichnet, dass** der Lernprozessor (20) mit einer Ausgabeeinheit (23) gekoppelt ist, durch welche eine Identifizierung des Fadenknotens (24) und/oder eine Zuordnung der analysierten Fehlergraphen einer der Fehlergraphkategorien visualisierbar ist.

12. Vorrichtung nach einem der Ansprüche 9 bis 11, **dadurch gekennzeichnet, dass** der Lernprozessor (20) ein neuronales Netz zur Ausführung des maschinellen Lernprogramms aufweist.

13. Vorrichtung nach einem der Ansprüche 9 bis 12, **dadurch gekennzeichnet, dass** der Lernprozessor (20) von der Eingabeeinheit (22) und der Ausgabeeinheit (23) räumlich getrennt ist.

14. Vorrichtung nach einem der Ansprüche 9 bis 13, **dadurch gekennzeichnet, dass** die Diagnoseeinheit (18) mit einer Maschinensteuereinheit (16) verbunden ist, durch welche ein Steuerbefehl zur Prozessänderung ausführbar ist.

## Claims

1. Method for texturing a synthetic thread (3), in which method the thread (3) is drawn off from a supply bobbin (5) and drafted, wherein a thread end of the supply bobbin (5) is connected to a thread start of a reserve bobbin (6) by a thread knot, and in which method a thread tension of the thread (3) is measured and analysed continuously in a measuring station in order to monitor the texturing, **characterized in that** in order to identify the thread knot at the measuring station, the measured signals of the thread tension are analysed by a machine learning program.

2. Method according to Claim 1, **characterized in that** a chronological sequence of measured signals of the thread tension is detected as an analysis graph and analysed.

3. Method according to Claim 1, **characterized in that** a chronological sequence of measured signals of the thread tension when a threshold value of the thread tension is overshot is detected as a fault graph and analysed.

4. Method according to one of Claims 1 to 3, **characterized in that** the analysis of the measured signals of the thread tension is carried out by at least one machine learning algorithm of the machine learning program.

5. Method according to Claim 4, characterized that the thread knot is identified by the machine learning algorithm from analysed analysis graphs or analysed fault graphs.

6. Device according to Claim 4 or 5, **characterized in that** the fault graphs are assigned to multiple fault categories, wherein the thread knot is one of the fault graph categories.

7. Method according to Claim 6, characterized that the other fault graph categories are assigned to a specific process fault and/or a specific operating error and/or a specific interfering parameter and/or a specific product fault.

8. Method according to one of the preceding claims, **characterized in that** following identification of the thread knot, or following the assignment of the fault graph to one of the fault graph categories, a control command relating to a process change is triggered.

9. Device for texturing a synthetic thread (3), having a creel (4) for holding a supply bobbin (5) and a reserve bobbin (6), having multiple delivery devices (7.1, 7.2, 7.3), having a texturing unit (11), having a winding station (2), and having a thread tension measuring device (17) for measuring a thread tension at a measuring station, **characterized in that** the thread tension measuring device (7) cooperates with a diagnostic unit (18) in such a manner that the measured signals of the thread tension (T) can be analysed by a machine learning program to identify a thread knot (24), wherein the diagnostic unit (18) has a programmable learning processor (20) for carrying out the machine learning program.

10. Device according to Claim 9, **characterized in that** the learning processor (20) is coupled to an input unit (22), by means of which one or a plurality of determined analysis graphs of the thread tension are able to be read.

11. Device according to Claim 9 or 10, **characterized in that** the learning processor (20) is coupled to an output unit (23), by means of which an identification of the thread knot (24) and/or an assignment of the analysed fault graphs to one of the fault graph categories is able to be visualized.

12. Device according to one of Claims 9 to 11, **characterized in that** the learning processor (20) has a neural network for executing the machine learning program.

13. Device according to one of Claims 9 to 12, **characterized in that** the learning processor (20) is physically separated from the input unit (22) and the output unit (23).

14. Device according to one of Claims 9 to 13, **characterized in that** the diagnostic unit (18) is connected to a machine control unit (16), by means of which a control command relating to the process change is able to be carried out.

## Revendications

1. Procédé pour texturer un fil synthétique (3), avec lequel le fil (3) est levé d'une bobine d'alimentation (5) et étiré, une fin de fil de la bobine d'alimentation (5) étant reliée à un début de fil d'une bobine de réserve (6) par un nœud de fil, et avec lequel la tension de fil du fil (3) est continuellement mesurée en un point de mesure et analysée afin de surveiller la texturation, **caractérisé en ce que** pour identifier le nœud de fil au niveau du point de mesure, les signaux de mesure de la tension de fil sont analysés avec un programme d'apprentissage automatique.

2. Procédé selon la revendication 1, **caractérisé en ce qu'**une suite chronologique de signaux de mesure de la tension de fil est acquise et analysée en tant que graphe d'analyse.

3. Procédé selon la revendication 1, **caractérisé en ce qu'**une suite chronologique de signaux de mesure de la tension de fil est acquise et analysée en tant que graphe de défaut en cas de dépassement d'une valeur de seuil de la tension de fil.

4. Procédé selon l'une des revendications 1 à 3, **caractérisé en ce que** l'analyse des signaux de mesure de la tension de fil est réalisée par au moins un algorithme d'apprentissage automatique du programme d'apprentissage automatique.

5. Procédé selon la revendication 4, **caractérisé en ce que** le nœud de fil est identifié par l'algorithme d'apprentissage automatique à partir des graphes d'analyse analysés ou des graphes de défaut analysés.

6. Arrangement selon la revendication 4 ou 5, **caractérisé en ce que** plusieurs catégories de défauts sont associées aux graphes de défaut, le nœud de fil étant l'une des catégories de graphe de défaut.

7. Procédé selon la revendication 6, **caractérisé en ce qu'**une perturbation déterminée du processus et/ou une erreur de commande déterminée et/ou un paramètre perturbateur déterminé et/ou un défaut de produit déterminé est/sont associés aux autres catégories de graphe de défaut.

8. Procédé selon l'une des revendications précédentes, **caractérisé en ce qu'**après l'identification du nœud de fil ou après l'association du graphe de défaut à l'une des catégories de graphe de défaut, une instruction de commande pour une modification du processus est déclenchée.

9. Arrangement pour texturer un fil synthétique (3), comprenant un râtelier (4) destiné à accueillir une bobine d'alimentation (5) et une bobine de réserve (6), comprenant plusieurs mécanismes débiteurs (7.1, 7.2, 7.3), comprenant un groupe de texturation (11), comprenant un point de bobinage (2) et comprenant un dispositif de mesure de tension de fil (17) destiné à mesurer une tension de fil au niveau d'un point de mesure, **caractérisé en ce que** le dispositif de mesure de tension de fil (17) coopère avec une unité de diagnostic (18) de telle sorte que les signaux de mesure de la tension de fil (T) peuvent être analysés avec un programme d'apprentissage automatique en vue d'identifier un nœud de fil (24), l'unité de diagnostic (18) possédant un processeur d'apprentissage programmable (20) destiné à exécuter le programme d'apprentissage automatique.

10. Arrangement selon la revendication 9, **caractérisé en ce que** le processeur d'apprentissage (20) est couplé à une unité d'entrée (22) par le biais de laquelle peuvent être chargés un ou plusieurs graphes d'analyse déterminés de la tension de fil.

11. Arrangement selon la revendication 9 ou 10, **caractérisé en ce que** le processeur d'apprentissage (20) est couplé à une unité de sortie (23) par laquelle peut être visualisée une identification du nœud de fil (24) et/ou d'une association des graphes de défaut à l'une des catégories de graphes de défaut.

12. Arrangement selon l'une des revendications 9 à 11, **caractérisé en ce que** le processeur d'apprentissage (20) possède un réseau neuronal destiné à exécuter le programme d'apprentissage automatique.

13. Arrangement selon l'une des revendications 9 à 12, **caractérisé en ce que** le processeur d'apprentissage (20) est séparé spatialement de l'unité d'entrée (22) et de l'unité de sortie (23).

14. Arrangement selon l'une des revendications 9 à 13, **caractérisé en ce que** l'unité de diagnostic (18) est reliée à une unité de commande de machine (16) par laquelle peut être exécutée une instruction de commande en vue de modifier le processus.
